# EUROPÄISCHE PATENTANMELDUNG

(11) **EP 4 796 311 A1**
(43) Veröffentlichungstag der Anmeldung: **26.08.2026**
(21) Anmeldenummer: 26159740.5
(22) Anmeldetag: 20.02.2026
(51) Int. Cl.: B32B 3/26, B32B 27/08, B32B 27/30, B32B 27/32, B32B 27/34, B32B 27/36, B32B 27/40, B32B 7/12

(54) **MEHRSCHICHTIGE FOLIE**

(30) Priorität: 21.02.2025 DE 102025106684
(71) Anmelder: Nitto Advanced Film Gronau GmbH, 48599 Gronau (DE); Nitto Denko Corporation, Osaka 567-8680 (JP)
(72) Erfinder: Sandmann, Nikolas, 48429 Rheine (DE); Sollmann, Henner, 48599 Gronau (DE); Trinkaus, Jan Michael, 53881 Euskirchen (DE)
(74) Vertreter: Grünecker Patent- und Rechtsanwälte PartG mbB

(57) **Zusammenfassung**

Beschrieben ist eine mehrschichtige Folie, umfassend eine Schicht (a) umfassend ein nichtwasserlösliches Polymer, und eine Schicht (b) umfassend ein quellbares oder wasserlösliches Polymer, wobei die Schicht (b) zusätzlich entweder einen geruchsbindenden Stoff und/oder einen Duftstoff enthält; sowie die Verwendung der Folie in Hygieneartikeln wie beispielsweise Windeln oder Dameneinzelbinden. Die mehrschichtige Folie kann unerwünschte Gerüche verursacht durch Flüssigkeiten wie z.B. Urin oder Menstruationsflüssigkeit effektiv und gezielt am Entstehungsort unterdrücken und ist zugleich einfach und kosteneffektiv in industriellem Maßstab herstellbar.

## Beschreibung

### TECHNISCHES GEBIET

Die vorliegende Erfindung bezieht sich auf eine mehrschichtige Folie, die als geruchsreduzierendes System zum Einsatz in Hygieneartikeln wie Windeln oder Dameneinzelbinden verwendet werden kann.

### HINTERGRUND

In Hygieneprodukten wie Windeln oder Dameneinzelbinden, in denen Körperflüssigkeiten wie beispielsweise Urin, Blut oder Menstruationsflüssigkeiten gesammelt werden, kommt es typischerweise zu einer Geruchsentwicklung. Diese Geruchsentwicklung weitgehend einzugrenzen oder gar zu verhindern ist somit ein wichtiger Faktor bei der Entwicklung von Hygieneartikeln mit erhöhtem Komfortfaktor für Anwender.

Eine mögliche Herangehensweise an diese Problemstellung ist die Bereitstellung eines wasserlöslichen Films, der mit Geruchsabsorbern, Parfümen oder Ölen gefüllt ist.

So offenbart EP 2 294 115 B1 beispielsweise einen Film, der aus einer wasserlöslichen Polymermatrix gebildet ist, in der mindestens ein Duftstoff enthalten ist. Der Film ist wasserempfindlich, sodass die Polymermatrix bei Kontakt mit einer ausreichenden Menge Wasser mit der Zeit ihre Integrität verliert und der Duftstoff zunehmend der Umgebung ausgesetzt wird, wo er seinen Geruch freisetzt. Die Möglichkeit, einen Duftstoff in die Polymermatrix einzuarbeiten, wird durch die Steuerung einer Vielzahl von Aspekten der Filmkonstruktion erreicht, einschließlich der Art des Duftstoffs, der Art des wasserlöslichen Polymers, der Art und Weise, in der die Polymermatrix und der Duftstoff in der Schmelze verarbeitet werden, usw. Beispielsweise kann der Duftstoff direkt in den Extruder eingespritzt und in der Schmelze mit dem wasserlöslichen Polymer vermischt werden.

EP 3 197 274 B1 offenbart einen extrudierten wasserlöslichen Artikel bestehend aus einem homogenen Material, das ein wasserlösliches Polymer enthält. Der Artikel enthält außerdem einen Wirkstoff, ausgewählt aus Isothiazolon, Alkyldimethylammoniumchlorid, Triazin, 2-Thiocyanomethylthiobenzothiazol, Methylenbisthiocyanat, Acrolein, Dodecylguanidinhydrochlorid, Chlorphenol, einem quaternären Ammoniumsalz, Glutaraldehyd, Dithiocarbamat, 2-Mercaptobenzothiazol, Parachlormeta-Xylenol, Silberverbindungen, Chlorhexidin, Polyhexamethylenbiguanid, N-Halamin, Triclosan, Phospholipid, einer Alpha-Hydroxysäure, 2,2-Dibrom-3-nitrilopropionamid, 2-Brom-2-nitro-1,3-propandiol, Farnesol, Jod, Brom, Wasserstoffperoxid, Chlordioxid, Ozon, ein Pflanzenöl, einem Pflanzenextrakt, Benzalkoniumchlorid, Chlor, Natriumhypochlorit und Kombinationen davon. Der Artikel kann die Form einer Folie haben und in einer möglichen Verwendung in einem saugfähigen Artikel angeordnet sein.

Beiden dieser Offenbarungen ist gemein, dass sie ihren jeweiligen Wirkstoff in einem wasserlöslichen Artikel, beispielsweise einem Film oder einer Folie, enthalten. Dies hat den Nachteil, dass die mechanischen Eigenschaften oft nicht den realen Einsatzanforderungen genügen. Zudem sind solche wasserlöslichen Artikel typischerweise hygroskopisch, was ihre Verarbeitung im industriellen Standard erheblich erschwert.

Eine weitere Möglichkeit wird in US 9 801 765 B2 offenbart. Dort wird ein Geruchskontrollmaterial beschrieben, das aus einem wasserunlöslichen partikulären Geruchskontrollmittel und einer thermoplastischen wasserlöslichen Trägermatrix besteht, die das Geruchskontrollmittel einkapselt. Die Trägermatrix löst sich bei Kontakt mit einer wässrigen Lösung, beispielsweise Urin, auf.

Das wasserunlösliche partikelförmige Geruchskontrollmittel wird durch einen aufwändigen mehrstufigen Prozess hergestellt, der die Schritte der Compoundierung, Folienextrusion und Ausstanzen oder Schneiden umfasst. Ein solcher Prozess ist im industriellen Maßstab mit hohem Energie- und Kostenaufwand verbunden.

Daher besteht Bedarf nach einer mehrschichtigen Folie, die geeignet ist, die Geruchsentwicklung bei Einsatz in einem Hygieneartikel effektiv zu verringern und zudem vorteilhafte mechanische Eigenschaften bietet und die auch im industriellen Maßstab einfach und kostengünstig hergestellt werden kann.

US 2020 / 0 039 173 A1 offenbart eine mehrschichtige Folie. Die mehrschichtige Struktur weist in dieser Reihenfolge eine Siegelschicht, eine Masseschicht, eine erste Verschlussschicht, eine Kernschicht, eine zweite Verschlussschicht, eine dritte Verschlussschicht und eine Geruchsbarriere auf, wobei die Siegelschicht ein homogenes Ethylen/α-Olefin-Copolymer mit einer Dichte von mindestens 0,906 g/cm³ enthält. Die Geruchsbarriere enthält ein Polyester, amorphes Polyamid, Polycarbonat, Polyvinylalkohol und/oder ein cyclisches Olefin-Copolymer. Die Folie und Varianten davon können durch Coextrusion, Extrusionsbeschichtung, Laminierung (mittels Klebstoff, Hitze usw.) hergestellt werden. DE 694 07 686 T2 offenbart einen mehrschichtiger Kunststoffbehälter umfassend eine Innenschicht und eine Außenschicht aus einem feuchtigkeitsbeständigen thermoplastischen Harz sowie eine Zwischenschicht aus einem Gasbarriereharz, die zwischen den beiden Schichten angeordnet ist, wobei jede Schicht auf der Innenseite der Zwischenschicht mit einem Adsorptionsmittel vermischt ist, dessen spezifische Oberfläche nicht kleiner als 1,0 m²/g ist.

### ZUSAMMENFASSUNG

Die vorliegende Erfindung löst diese Aufgabe mit dem Gegenstand der hierin definierten Ansprüche. Die Vorteile der vorliegenden Erfindung werden im folgenden Abschnitt näher erläutert, und weitere Vorteile werden dem Fachmann bei der Betrachtung der Offenbarung der Erfindung deutlich werden.

Allgemein stellt die vorliegende Erfindung in einem Aspekt eine mehrschichtige Folie bereit, umfassend eine Schicht (a) umfassend ein nicht-wasserlösliches Polymer, und eine Schicht (b) umfassend ein quellbares oder wasserlösliches Polymer, wobei die Schicht (b) zusätzlich einen geruchsbindenden Stoff und/oder einen Duftstoff enthält.

In einem weiteren Aspekt stellt die vorliegende Erfindung eine Verwendung der Folie in einem Hygieneartikel bereit.

### KURZE BESCHREIBUNG DER FIGUREN

Figur 1: Schematischer Aufbau einer beispielhaften Folie mit fünfschichtigem Aufbau.
Figur 2: Schematischer Aufbau einer beispielhaften Folie mit dreischichtigem Aufbau.

### DETAILLIERTE BESCHREIBUNG DER ERFINDUNG

Zum besseren Verständnis der vorliegenden Erfindung wird nun auf die folgende Beschreibung von Ausführungsbeispielen verwiesen:
In einem ersten Aspekt bezieht sich die vorliegende Erfindung auf eine mehrschichtige Folie, umfassend eine Schicht (a) umfassend ein nicht-wasserlösliches Polymer, und eine Schicht (b) umfassend ein quellbares oder wasserlösliches Polymer, wobei die Schicht (b) zusätzlich einen geruchsbindenden Stoff oder einen Duftstoff oder eine Kombination davon enthält. Das quellbare oder wasserlösliche Polymer quillt auf oder löst sich bei Wasserkontakt oder Kontakt mit Körperflüssigkeiten und legt dadurch den geruchsbindenden Stoff oder den Duftstoff frei oder erhöht die Diffusionsgeschwindigkeit von geruchsverursachenden Stoffen zum geruchsbindenden Stoff.

Der Begriff "wasserlöslich" bezeichnet einen Stoff, der sich bei Kontakt mit Wasser oder einer wässrigen Lösung, z. B. Urin oder Blut, auflösen kann. In diesem Zusammenhang ist ferner gemeint, dass sich das wasserlösliche Polymer zumindest teilweise auflöst, so dass wasserunlösliche Partikel wie geruchsbindende Stoffe oder Duftstoffe, die in einer wasserlöslichen Trägermatrix eingeschlossen sind, freigelegt werden. Ein quellbares Polymer im Rahmen dieser Offenbarung ist ein Polymer, in das Wasser oder eine wässrige Lösung eindringen können und somit eine Volumenvergrößerung des Polymers bewirken, wodurch wasserunlösliche Partikel wie geruchsbindende Stoffe oder Duftstoffe freigelegt werden. Beispiele sind insbesondere Polyvinylalkohol und Polyethylenglycol, sowie wasserlösliche oder in Wasser quellbare Acrylpolymere. Geeignete quellbare Polymere können auch Celluloseester und Celluloseether sein, wie Celluloseacetat, solange diese Materialien ausreichend schnell aufquellen.

In einer bevorzugten Ausführungsform ist das nicht-wasserlösliche (in dieser Anmeldung auch als wasserunlösliches Polymer bezeichnet) Polymer ein Polystyrol, Polyester, Polyurethan oder Polyolefin oder ein biologisch abbaubares Polymer. Beispiele biologisch abbaubarer Polymere sind Polymere mit Esterverknüpfungen in der Hauptkette, die durch hydrolytische Vorgänge abgebaut werden können (aber bei einem ersten Kontakt mit Wasser oder Feuchtigkeit ihre Integrität nicht verlieren, also wasserunlöslich im Sinne der vorliegenden Erfindung sind) oder auch Cellulose basierte Polymere. Konkrete Beispiele sind Celluloseester und Celluloseether, wie Celluloseacetat; auf Milchsäure basierte Polymere; Polyglykolsäure; Copolymere davon, wie Polylactid-co-glycolid; Poly-epsilon-caprolacton, Poly(butylenadipat-co-terephthalat) und Polyhydroxyalkanoate. Die Verwendung eines solchen Polymers in der Schicht (a) gewährt der mehrschichtigen Folie vorteilhafte mechanische Eigenschaften und die notwendige Formstabilität, beispielsweise zur Anwendung in Hygieneartikeln.

Vorzugsweise umfasst die Schicht (a) Polyethylen (PE) oder Polypropylen (PP) um die gewünschten mechanischen Eigenschaften zu gewährleisten. Das biologisch abbaubare Polymer ist vorzugsweise Poly(butylenadipat-co-terephthalat) (PBAT) oder eine Mischung von PBAT mit anderen biologisch abbaubaren Polymeren, insbesondere PLA. Die Dicke der Schicht (a) beträgt beispielsweise 10 bis 45 µm, bevorzugt 10 bis 40 µm und besonders bevorzugt 15 bis 35 µm, um die gewünschten mechanischen Eigenschaften zu erhalten.

In einer Ausführungsform umfasst die Schicht (a) Polyethylen mit hoher Dichte (HDPE) alleine oder in Kombination mit mindestens einem weiteren nicht-wasserlöslichen Polymer um die notwendige Formstabilität sicherzustellen. Vorzugsweise liegt das Polyethylen mit hoher Dichte (HDPE) in einer Menge von 1,00 bis 15,0 Gew.-% in der Schicht (a) vor, besonders bevorzugt in einer Menge von 2,00 bis 10,00 Gew.-% und noch bevorzugter in einer Menge von 4,00 bis 8,00 Gew.-% vor. Damit kann insbesondere eine gewünschte Formstabilität gesichert werden.

In einer Ausführungsform umfasst die Schicht (b) Polyvinylalkohol (PVOH) als quellbares oder wasserlösliches Polymer um die effektive Freilegung des geruchsbindenden Stoffs und/oder des Duftstoffs zu ermöglichen. Der Duftstoff wird bevorzugt aus einem Öl oder Parfum mit einem Siedepunkt von über 165 °C ausgewählt, Beispiele sind längerkettige etherische Öle. Der geruchsbindende Stoff wird vorzugsweise ausgewählt aus mindestens einem aus Zeolith, Cyclodextrin, Aktivkohle, ZnO, CaO, SiO₂, ZrO₂, anorganischen oder organischen Zinksalzen, anorganischen oder organischen Zirkoniumsalzen, wie beispielsweise Zinkricinoleat, Organosiloxanen und Chelatbildnern, wie beispielsweise Zitrat oder EDTA und weist vorzugsweise einen Schmelzpunkt oder eine Zersetzungstemperatur von über 200 °C auf. Erfindungsgemäß bevorzugt sind Zeolithe, ZnO, SiO₂ und Cyclodextrine, optional in Kombination mit einem Duftstoff. Bevorzugt sind insbesondere Zeolithe, da deren geruchsbindende Eigenschaften gut sind und durch die gezielte Einstellung der Porengröße des jeweiligen Zeolithmaterials gesteuert werden können (da die Größe der Poren relevant ist für die Art an Geruchsstoffen, die gebunden werden können).

Die geruchsbindenden Stoffe und/oder die Duftstoffe werden so ausgewählt, dass sie in der Lage sind, die in einer jeweiligen Anwendung auftretenden "Zielstoffe" zu binden oder zumindest zu maskieren. Dies können, je nach Anwendungsgebiet beispielsweise Ammoniak oder andere Stickstoff basierende störende Gerüche sein, oder Fäkalgerüche oder, wenn beispielsweise eine Anwendung im Bereich der Müllverpackung angedacht ist, Verrottungsgerüche bei Pflanzenabfällen etc.

Die Auswahl des Duftstoffs oder des geruchsbindenden Stoffs ermöglicht die effektive Reduktion einer unerwünschten Geruchsentwicklung, beispielsweise beim Einsatz der mehrschichtigen Folie in einem Hygieneartikel. Ein zuvor beschriebener Duftstoff kann zudem eine kühlende Wirkung an einer Kontaktstelle des Films zur Haut aufweisen. Vorzugsweise liegt der geruchsbindende Stoff oder der Duftstoff in einer Konzentration von 0,50 bis 25,0 Gew.-% in der Schicht (b) vor, besonders bevorzugt in einer Konzentration von 0,50 bis 10,0 Gew.-% und noch bevorzugter in einer Konzentration von 1,00 bis 8,00 Gew.-%. Dadurch kann eine unerwünschte Geruchsentwicklung effektiv reduziert werden. Auch kann die Schicht (b) eine Kombination eines oder mehrerer geruchsbindender Stoffe und Duftstoffe enthalten, um ein größeres Wirkungsspektrum gegenüber unerwünschten Gerüchen zu generieren. Die Dicke der Schicht (b) beträgt beispielsweise 1 bis 10 µm, bevorzugt 1 bis 6 µm und besonders bevorzugt 2 bis 4 µm um die notwendige Formstabilität sicherzustellen und gleichzeitig eine effektive Freilegung des geruchsbindenden Stoffs oder des Duftstoffs zu ermöglichen.

In einer Ausführungsform kann die Schicht (b), beispielsweise durch Zugabe eines Schäumungsmittels modifiziert werden, so dass eine poröse Struktur entsteht. Das Schäumungsmittel basiert vorzugsweise auf Natriumhydrogencarbonat, das unter Hitze im Herstellungsprozess, beispielsweise einem Extrusionsprozess zu CO₂ und H₂O zerfällt und die Polymerschmelze so nach Austritt aus der Extrusionsdüse aufbläht. In ein anderen Ausführungsform kann das Aufschäumen auch physikalisch durch Injektion von Gasen wie beispielsweise CO₂ in den Extrusionszylinder erfolgen. Durch Aufschäumen der Schicht (b) wird deren Oberfläche vergrößert, so dass das die Schicht Poren aufweist. So wird eine poröse, beispielsweise offenporige Struktur erhalten, was eine schnellere Einwirkung von Feuchtigkeit ermöglicht, so dass der geruchskontrollierende Effekt schneller auftritt.

**In** einer weiteren Ausführungsform umfasst die mehrschichtige Folie zusätzlich eine Kernschicht (c) und eine Außenschicht (d), wobei die einzelnen Schichten in der Reihenfolge (a), (c), (b), (d) angeordnet sind.

Die Kernschicht (c) verfügt über Gasbarriereeigenschaften und verhindert somit, dass flüchtige Duftstoffe über die durchlässige Schicht (a) aus der Folie migrieren. Auch wird durch die Kernschicht (c) verhindert, dass die Folie bereits ohne Kontakt mit Wasser oder einer wässrigen Lösung je nach verwendetem Duftstoff einen Geruch erzeugt. Die Kernschicht (c) umfasst in einer Ausführungsform ein Ethylen-Vinylalkohol-Copolymer (EVOH) oder Polyvinylalkohol (PVOH), wobei ein Ethylen-Vinylalkohol-Copolymer (EVOH) aus Kostengründen bevorzugt wird. Die Dicke der Kernschicht (c) beträgt beispielsweise 1 bis 10 µm, bevorzugt 1 bis 6 µm und besonders bevorzugt 2 bis 4 µm, um die Gasbarriereeigenschaften effektiv sicherzustellen.

Die Außenschicht (d) dient ebenfalls als Barriereschicht um ein vorzeitiges Entweichen des Duftes bei Verwendung eines Duftstoffs in Schicht (b) zu verhindern. Die Außenschicht (d) umfasst ein quellbares wasserlösliches Polymer, beispielsweise Polyvinylalkohol. Dies ist notwendig, da sich an der Außenschicht (d) der Angriffspunkt für das Wasser oder die wässrige Lösung befindet. Die Außenschicht (d) quillt dabei auf oder löst sich auf um den geruchsbindenden Stoff oder Duftstoff aus der darunterliegenden Schicht (b) freizulegen. Die Dicke der Außenschicht (d) beträgt beispielsweise 1 bis 10 µm, bevorzugt 1 bis 6 µm und besonders bevorzugt 2 bis 4 µm um die notwendige Formstabilität sicherzustellen und gleichzeitig eine effektive Freilegung des geruchsbindenden Stoffs oder des Duftstoffs zu ermöglichen
**In** einer weiteren Ausführungsform umfasst die mehrschichtige Folie zusätzlich eine Schicht (e) umfassend einen Haftvermittler, wobei die Schicht (e) zwischen den Schichten (a) und (c) angeordnet ist oder, falls die Folie keine Schicht (c) und keine Schicht (d) aufweist, zwischen den Schichten (a) und (b) angeordnet ist.

Die Schicht (e) dient dazu, die unpolare Schicht (a) mit der nächsten polaren Schicht, also entweder Schicht (c) oder Schicht (b) zu verbinden, um so für die notwendige Stabilität des mehrschichtigen Aufbaus der erfindungsgemäßen Folie zu sorgen. Der Haftvermittler ist bevorzugt ein Maleinsäureanhydrid gepfropftes lineares Polyethylen niedriger Dichte (LLDPE), um auch bei geringer Foliendicke eine ausreichende Haftung zwischen der unpolaren Schicht (a) und der nächstliegenden polaren Schicht zu erreichen. Die Dicke der Schicht (e) beträgt beispielsweise 1 bis 10 µm, bevorzugt 1 bis 6 µm und besonders bevorzugt 2 bis 4 µm um die notwendige Haftung zu gewährleisten und somit die Formstabilität der mehrschichtigen Folie sicherzustellen.

In einer Ausführungsform kann die mehrschichtige Folie zusätzlich wasserlösliche antibakterielle Verbindungen wie beispielsweise Zinkchlorid, Kupfersalze, Ammoniumsalze oder Komplexierungsmittel enthalten.

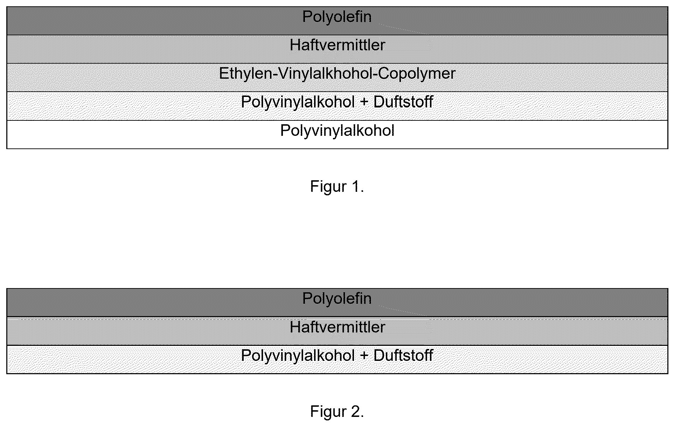

Die mehrschichtige Folie der oben beschriebenen Ausführungsformen wird vorzugsweise durch ein Extrusionsverfahren hergestellt. Dabei kann der Schichtaufbau der Folie zwei, drei, vier oder fünf Schichten umfassen. In einem fünfschichtigen Aufbau (Figur 1) sind die oben beschriebene Schichten in der Reihenfolge (a), (e), (c), (b), (d) angeordnet. In einem vierschichtigen Aufbau sind die Schichten in der Reihenfolge (a), (c), (b), (d) angeordnet. Ein solcher vierschichtiger Aufbau ohne Schicht (e) ist bevorzugt, wenn die Schicht (a) ein biologisch abbaubares Polymer umfasst, da ein solches auch ohne Haftvermittler co-extrudiert werden kann. In einem dreischichtigen Aufbau (Figur 2) sind die Schichten in der Reihenfolge (a), (e), (b) angeordnet. Ein solcher dreischichtiger Aufbau ohne Kernschicht (c) und Außenschicht (d) ist bevorzugt, wenn in der Schicht (b) ein geruchsbindender Stoff verwendet wird, der bei Standardbedingungen von 25 °C und 1 bar einen festen Aggregatzustand aufweist. In diesem Fall kann beim Aufbau der mehrschichtigen Folie auf eine Kernschicht (c) und eine Außenschicht (d) verzichtet werden, da eine Migration des geruchsbindenden Stoffs aus der Folie nicht erfolgen kann. In einem zweischichtigen Aufbau sind die Schichten in der Reihenfolge (a), (b) angeordnet. Ein solcher Aufbau ist bevorzugt, wenn die Schicht (a) ein biologisch abbaubares Polymer umfasst und die Schicht (b) einen geruchsbindenden Stoff umfasst, der bei Standardbedingungen von 25 °C und 1 bar einen festen Aggregatzustand aufweist.

Der geruchsbindende Stoff oder Duftstoff in Schicht (b) kann im Herstellungsverfahren der Folie entweder bei der Extrusion der Folie zugegeben werden oder als Masterbatch hinzugefügt werden. Die Auswahl eines Duftstoffs mit einem Siedepunkt von über 165 °C ermöglicht die direkte Einbringung des Duftstoffs in den Extrusionsprozess. Analog ermöglicht die Auswahl eines geruchsbindenden Stoffes mit einem Schmelzpunkt oder einer Zersetzungstemperatur von mehr als 200 °C die Einbringung des Stoffes in den Extrusionsprozess.

In einer Ausführungsform wird die Folie im Herstellungsverfahren perforiert. Dies geschieht beispielsweise durch Vakuumperforation, Laserperforation oder mechanische Perforation. Dies ermöglicht den Einsatz der Folie in Hygieneartikeln wie beispielsweise Windeln oder Dameneinzelbinden, wobei die Folie z.B. als Lage unterhalb der obersten Lage, welche mit der Haut in Kontakt ist, angebracht werden kann, wobei die Folie so orientiert ist, dass Schicht (a) an besagte oberste Lage angrenzt. Ein solcher Aufbau unter Verwendung einer perforierten Folie gemäß der vorliegenden Erfindung ermöglicht eine Hydrophilisierung eines Lagenverbundes mit ADL-Fixierung (ADL = acquisition distribution layer), wodurch Wasser oder eine wässrige Lösung schneller durch den Lagenverbund dringen kann.

In einer weiteren Ausführungsform wird die Folie in einem Hygieneartikel verwendet und so orientiert, dass die Schicht (b) oder, je nach Aufbau, die Außenschicht (d) zum Inneren des Hygieneartikels zeigt und so mit der Flüssigkeit in Kontakt treten kann. In diesem Fall wird die Folie im Herstellungsverfahren nicht perforiert. Stattdessen kann bevorzugt ein Füllstoff wie beispielsweise Kreide in die Schicht (a) eingebracht werden und die Folie, soweit notwendig um die erforderlichen Eigenschaften zu erzielen (Atmungsaktivität; Wasserdampfdurchlässigkeit etc.), durch anschließende Reckung atmungsaktiv oder wasserdampfdurchlässig gemacht werden. Sollte die Schicht (a) ein biologisch abbaubares Polymer umfassen, ist, soweit das notwendige Eigenschaftsprofil (Atmungsaktivität; Wasserdampfdurchlässigkeit etc.) erreicht wird, keine Reckung notwendig. Sollte dies nicht der Fall sein, kann wieder die gewünschte Atmungsaktivität oder Wasserdampfdurchlässigkeit durch Reckung eingestellt werden.

Ein weiterer Aspekt der vorliegenden Erfindung beschreibt die Verwendung der oben beschriebenen mehrschichtigen Folie in einem Hygieneartikel wie beispielsweise einer Windel oder eine Dameneinzelbinde gemäß den oben beschriebenen Ausführungsformen. Andere mögliche Anwendungen sind der Einsatz zur Herstellung von Verpackungen, wie Beuteln, die beispielweise Hygieneprodukte nach deren Anwendung aufnehmen können oder Müllbeutel zur Aufnahme feuchter Abfälle, die unerwünschte Gerüche freisetzen. Ebenfalls möglich ist der Einsatz im medizinischen Bereich, beispielweise in der Form von Stomabeuteln oder Beuteln zur Verpackung medizinischer Abfälle.

Es wird deutlich, dass die vorliegende Erfindung jedes der bevorzugten Merkmale verwenden kann, die oben in Bezug auf die Beschreibung der einzelnen Ausführungsformen angegeben sind, und dass die bevorzugten Merkmale in jeder beliebigen Kombination kombiniert werden können, mit Ausnahme von Kombinationen, bei denen zumindest einige der Merkmale sich gegenseitig ausschließen.

### BEISPIELE

Folgend wird die vorliegende Erfindung anhand von Beispielen beschrieben. Tabelle 1 zeigt eine Folie mit fünfschichtigem Aufbau und eine Folie mit dreischichtigem Aufbau gemäß oben beschriebenen Ausführungsformend der vorliegenden Erfindung.

**Tabelle 1**

| | Schicht | Dicke [µm] | Anteil [Gew.-%] | Material 1 | Anteil [Gew.-%] | Material 2 |
|---|---|---|---|---|---|---|
| | Polyolefin | 20 | 95 | LD 151 BW | 5 | HD 6070 FA |
| Fünfschichtige Folie | Haftvermittler | 3 | 100 | Admer NF518E | | |
| | EVOH | 3 | 100 | DC 3203RB | | |
| | PVOH | 3 | 96 | Mowiflex C17 | 4 | ARX V 24 |
| | PVOH | 3 | 100 | Mowiflex C17 | | |
| Dreischichtige Folie | PE | 20 | 95 | LD 151 BW | 5 | HD 6070 FA |
| | Haftvermittler | 3 | 100 | Admer NF518E | | |
| | PVOH | 3 | 95 | Mowiflex C17 | 5 | KD 211 |

| | | | | | | |
|---|---|---|---|---|---|---|
| • LD 151 BW: ExxonMobil^{™} LDPE LD 151BW; Polyethylenharz mit niedriger Dichte, hergestellt von ExxonMobil • Admer^{™} NF518E: Maleinsäureanhydrid gepfropftes lineares Polyethylen niedriger Dichte (LLDPE), hergestellt von Mitsui Chemicals • DC3203 RB: Soarnol^{™} DC3203RB, Ethylen-Vinylalkohol-Copolymer mit einem Ethylengehalt von 32 Mol.-%, hergestellt durch Mitsubishi Chemical Group • Mowiflex^{™} C17: Thermoplastischer und wasserlöslicher Polyvinylalkohol, hergestellt durch Kuraray; (MFI (190°C / 21,6 kg ) 14 bis 20 g/10 min; Schmelztemperatur 170 °C) • HD 6070 FA: Rigidex^{®} HD6070FA, Polyethylen mit hoher Dichte (HDPE), hergestellt durch INEOS Olefins & Polymers Europe • ARX V24: Masterbatch mit einem Duftstoff "Zitrone" in Polyethylen der Firma ARGUS Additive Plastics GmbH • KD 211: Anorganisches Material bestehend hauptsächlich aus Zink, hergestellt von RASA Industries, Ltd. | | | | | | |

Beide in Tabelle 1 gezeigten Folien wurden co-extrudiert (Castfolienextrusion; als Alternative kann auch Blasfolienextrusion eingesetzt werden). Wie ausgeführt wurden Folien gemäß oben beschriebenen Ausführungsformen erhalten. Die erhaltenen Folien werden erst bei Kontakt mit Flüssigkeit, z.B. Urin oder Menstruationsflüssigkeit, aktiv, legen dann ihren jeweiligen Wirkstoff frei und können so unerwünschte Gerüche effektiv und gezielt an ihrem Entstehungsort bekämpfen.

## Patentansprüche

1. Mehrschichtige Folie, umfassend
eine Schicht (a) umfassend ein nicht-wasserlösliches Polymer, und
eine Schicht (b) umfassend ein quellbares oder wasserlösliches Polymer, wobei die Schicht (b) zusätzlich entweder einen geruchsbindenden Stoff oder einen Duftstoff oder eine Kombination davon enthält.

2. Mehrschichtige Folie nach Anspruch 1, wobei das nicht-wasserlösliche Polymer ein Polystyrol, Polyester, Polyurethan oder Polyolefin oder ein biologisch abbaubares Polymer ist und wobei das nicht-wasserlösliche Polymer bevorzugt Polyethylen oder Polypropylen ist.

3. Mehrschichtige Folie nach Anspruch 1 oder 2, wobei die Folie zusätzlich eine Kernschicht (c) und eine Außenschicht (d) aufweist, wobei die einzelnen Schichten in der Reihenfolge (a), (c), (b), (d) angeordnet sind.

4. Mehrschichtige Folie nach einem der Ansprüche 1 bis 3, wobei die Folie zusätzlich eine Schicht (e) umfassend einen Haftvermittler aufweist, wobei die Schicht (e) zwischen den Schichten (a) und (c) angeordnet ist oder, falls die Folie keine Schicht (c) und keine Schicht (d) aufweist, zwischen den Schichten (a) und (b) angeordnet ist, wobei der Haftvermittler bevorzugt ein mit Maleinsäureanhydrid gepfropftes lineares Polyethylen niedriger Dichte (LLDPE) ist.

5. Mehrschichtige Folie nach einem der Ansprüche 1 bis 4, wobei die Folie perforiert ist.

6. Mehrschichtige Folie nach einem der Ansprüche 1 bis 5, wobei die Schicht (a) eine Dicke von 10 bis 45 µm aufweist und/oder die Schicht (b) eine Dicke von 1 bis 10 µm aufweist und/oder die Kernschicht (c) eine Dicke von 1 bis 10 µm aufweist und/oder die Außenschicht (d) eine Dicke von 1 bis 10 µm aufweist und/oder die Schicht (e) eine Dicke von 1 bis 10 µm aufweist.

7. Mehrschichtige Folie nach einem der Ansprüche 1 bis 6, wobei der geruchsbindende Stoff oder der Duftstoff in Schicht (b) in einer Konzentration von 0,50 bis 25,00 Gew.-% vorliegt.

8. Mehrschichtige Folie nach einem der Ansprüche 1 bis 7, wobei das wasserlösliche Polymer Polyvinylalkohol ist.

9. Mehrschichtige Folie nach einem der Ansprüche 2 bis 8, wobei das biologisch abbaubare Polymer Poly(butylenadipat-co-terephthalat) enthält.

10. Mehrschichtige Folie nach einem der Ansprüche 3 bis 9, wobei die Außenschicht (d) Polyvinylalkohol umfasst und/oder die Kernschicht (c) ein Ethylen-Vinylalkohol-Copolymer oder Polyvinylalkohol umfasst.

11. Mehrschichtige Folie nach einem der Ansprüche 1 bis 10, wobei der geruchsbindende Stoff bei 25 °C und 1 bar einen festen Aggregatszustand aufweist und wobei der geruchsbindende Stoff bevorzugt ausgewählt ist aus mindestens einem aus Zeolith, Cyclodextrin, Aktivkohle, ZnO, CaO, SiO₂, ZrO₂, anorganischen oder organischen Zinksalzen, anorganischen oder organischen Zirkoniumsalzen, wie beispielsweise Zinkricinoleat, Organosiloxanen und Chelatbildnern, wie beispielsweise Zitrat oder EDTA.

12. Mehrschichtige Folie nach einem der Ansprüche 1 bis 11, wobei die Folie weitere wasserlösliche oder nicht wasserlösliche antibakterielle Verbindungen enthält.

13. Mehrschichtige Folie nach einem der Ansprüche 1 bis 12, wobei die wasserlösliche oder wasserquellbare Schicht durch Zugabe eines Schäumungsmittels oder eines Gases eine poröse Struktur aufweist.

14. Verwendung der mehrschichtigen Folie nach einem der Ansprüche 1 bis 13 in einem Hygieneartikel, wobei die Folie bevorzugt durch Perforation wasserdurchlässig ist und/oder die wasserlösliche oder wasserquellbare Schicht der Haut des Benutzers abgewandt ist und/oder die Folie eine Barriere gegen Flüssigkeit darstellt.

15. Verwendung der mehrschichtigen Folie nach einem der Ansprüche 1 bis 13 zur Herstellung von Verpackungsmaterial, vorzugsweise in Beutelform; beispielsweise Müllbeutel, Beutel zur Verpackung medizinischer Abfälle, Stomabeutel und Beutel zur Verpackung feuchter Abfälle.
